Europäisches Patentamt

European Patent Office

Office européen des brevets

(11) Publication number: **0 468 124 A1**

## EUROPEAN PATENT APPLICATION

(21) Application number: 90630134.6

(22) Date of filing: 25.07.90

(51) Int. Cl.5: **E06B 3/66**, E04C 2/54

(43) Date of publication of application:
29.01.92 Bulletin 92/05

(84) Designated Contracting States:
AT BE CH DE DK ES FR GB GR IT LI LU NL SE

(71) Applicant: SOLAR + ENVIRONMENT
TECHNOLOGIES S.A.
Route de Luxembourg, 132
L-7241 Bereldange(LU)

(72) Inventor: Urbanek, Andrzej
ul. Polna 6
05-420 Jozefow(PL)
Inventor: Seidel, Günther
Route de Luxembourg 132
L-7241 Bereldange(LU)

(74) Representative: Waxweiler, Jean et al
OFFICE DENNEMEYER S.à.r.l. P.O. Box 1502
L-1015 Luxembourg(LU)

(54) Method of manufacturing multiple plate panel incorporating granular silica aerogels.

(57) A method of manufacturing multiple plate panels
incorporating granular silica aerogels is disclosed.
The method includes the steps of heating the panel
incorporating granular aerogels to a temperature
higher than ambient temperature, vacuuming gas
contained within the panel, keeping the panel under
partial vacuum and at high temperature for an appropriate time period, closing the opening provided at
the upper part of the edging in order to keep the
panel under the previously provided partial vacuum,
and cooling the panel down to the ambient tempera-
ture.

EP 0 468 124 A1

The present invention relates to a method of manufacturing multiple plate panels in which granular silica aerogels are incorporated as transparent insulation material.

The granular silica aerogels, transparent insulating materials of a new generation, offer new possibilities to manufacture multiple plate panels having high solar radiation transmittance and low thermal conductivity. Compared to the previously known transparent insulants like polycarbonate honeycombs or capillaries, acrylic foams or inorganic glass fibres the aerogels show different physical, chemical and mechanical properties. The properties and processes to manufacture the aerogels are the subject of several patents (German Patent DE 3429671, European Patent EP 171722, US Patents 3672833, 4667417 and 4610863).

Each procedure to manufacture granular form of transparent aerogels furnishes granular material with a wide grain size distribution from typically 1 to 7 mm, low mechanical strength, medium elasticity, very high porosity and surface area. The aerogels absorb water vapour very easily, however they change their properties (get white, opaque) when they are in contact with liquid water.

Multiple plate panels incorporating granular silica aerogels are of particular use for insulation transparent windows, solar energy storage walls, solar collectors, insulating panels for low temperature requirements, etc. Multiple plate panels comprise at least two plates and each plate can be made of glass, metal, plastic or any other material according to the requirements. For example, in case of glazing panels, at least two plates made of glass are used. On the other hand, other applications require the use of multiple plate panels comprising individual plates each made of different materials.

The use of the new transparent insulating material - aerogel - enables to manufacture a new generation of multiple plate panels with satisfactory transparency, low heat conductivity as well as acoustic properties. This requires the development of a new procedure to produce panels of appropriate properties which would be unchanged for about 20 years of exploitation.

The previously known methods of manufacturing panels incorporating granular aerogels consist of manufacturing the panel box in form of at least two plates edged with a weather proof, vacuum keeping sealing material in which one or several openings for inserting the aerogel are provided. Aerogel is then supplied to the space between these plates. The distance between such plates is typically from 10 to 30 mm and mainly 12 to 24 mm. The shape of the unit is chosen according to the need of its use. Aerogel granules are supplied to the vibrating panel to create a more dense structure of granules. The filled unit is then closed tightly by fitting the openings previously used for inserting aerogel to the inside of the panel

In case of filling the unit in an horizontal position, the full edges are installed at one plate. The created space is filled with aerogel up to the top level and then the second plate is pressed down from the top side and tightly connected with the edging previously installed.

The above mentioned previously known methods of manufacturing such panels with incorporated granular aerogel, applied in a laboratory scale to furnish test panels with aerogel gave no satisfactory results. Aerogel granules settled in time and created an empty space at the top of the panel vertically positioned panel. The settling is caused by free moving of the granules inside the panel. This results from outside vibrations as well as from the changes of temperature and/or atmospheric pressure which influence the volume of the tightly closed space of the panel filled with aerogel.

Except the settling effect, some of aerogel granules destroy due to the contact with water which diffuses out of aerogel granules and condense inside this panel at low temperatures. The condensed water originates from the aerogel granules which usually contain from typically 3 to 11 weight % water absorbed in aerogel. The water is, in part, the residue of the production process, and in part water is absorbed from air. In case of installing a glazing element with aerogel in windows or before collectors of heat storing walls the high temperature differences of 20 - 40 K arise between the backside and the frontside plate of the panel. Then, water desorbs from the hot part of aerogel and condenses at the internal wall of the frontside plate exposed to the low, winter time temperatures. Condensation or even freezing of water occurs in panels installed as window insulation or as an insulation being the part of a wall for absorption of solar radiation.

The disadvantages of the previously known methods of manufacturing the panels with granular aerogel therein as transparent insulation reduces their application to other uses than insulated windows or wall collectors.

On the other hand, the very promising behaviours of aerogel in a sense of transparency and thermal conductivity forced to improve the technology for manufacturing panels incorporating granular silica aerogels. Since the dimensions, shape and materials of the panels incorporating aerogel when manufactured are fixed, the only way to improve the properties of aerogel panels was to change and improve the method of manufacturing it.

The object of the invention is to develop a new method of manufacturing the panels in which aerogel settling as well water condensation inside the panel is avoided. Another object of the invention is to provide a multiple plate panel having improved characteristics, and in particular, to improve the insulating characteristics of the panel.

According to the invention, these objects are achieved by heating the panel incorporating granular aerogels to a temperature higher than ambient temperature, vacuuming gas contained within the panel, keeping the panel under partial vacuum and at the high temperature for an appropriate time period, closing the opening(s) provided at the upper part of the edging in order to keep the panel under the previously provided partial vacuum, and cooling the panel down to the ambient temperature

The above features are realized as a result of the present invention according to which, the method to manufacture panels incorporating granular silica aerogel has been developed. The present invention provides an easy and unexpensive process which results in the properties of panels which fits the requirements of transparent insulation for windows, solar energy storage walls and solar collectors as well as for the requirements of insulants for low temperature techniques.

The required properties of panels incorporating granular silica aerogel are obtained as a result of special arrangement of the panels manufacturing method. The method according to the present invention is based on heating up the panel to a temperature which helps to desorb and expell the water absorbed at the surface of the granules of silica aerogels as well as it is based on the evacuation of the inside of the panel at elevated temperatures to facilitate water desorption and to make a partial vacuum inside the ready, finished panel to render its properties independent of remarkable changes of ambient temperature and/or pressure.

Particularly, the method involves the conventional steps of manufacturing of a panel box of two glass plates edged around with a tight, weather resistant seal with openings for supplying the aerogel to the inside of the box as well as it involves the inserting of aerogel inside the panel. However, the following stages of the presented method, namely thermal treatment of the panel filled with aerogel as well as the vacuuming at elevated temperature and tight closing the panel to keep the vacuum for post manufacturing period are new steps unknown previously.

Typically, the invention covers the treatment of granular silica aerogel placed inside of the panel at a temperature higher than ambient temperature and under a pressure of not more than 400 millibars. The improved method of manufacturing results in avoiding the settling of aerogel within the panel for long time periods and results in the improvement of panels properties in a sense of resistance against water condensation within the panel.

## Detailed description of the invention

The various features of novelty which characterize the invention are pointed out with particularity in the claims annexed to and forming a part of this specification. For a better understanding of the invention, its operating advantages and specific objects attained by its use, reference should be had to the following description thereof.

The present invention consists in an improved method for manufacturing the panels incorporating granular silica aerogels, which involves the thermal and vacuum treatment of the aerogel granules positioned inside the panel as well as the tightening the completely vacuumed panel to keep the vacuum for immobilising the aerogel granules inside the panel against mechanical and thermal stresses.

The consecutive steps of the procedure being the subject of the present invention are described below in details with respect to glazing panels.

As mentioned above it should be understood, however, that the method steps can also be applied to other panels comprising plastic plates or metal plates or any combination thereof.

The glass plates of required shape are first cut then washed and dried. The glasses could have any chemical composition and any thickness. However, for its application in solar radiation, transparent panels having low iron content glass and as thin as possible glass plates, are advantageous. The thickness of glass plates used for glazing panels manufacturing is usually from 3 to 6 millimeters.

The glass plates are then sticked together at their edges by any partially elastic slab which adheres excellently to the glass and provides the spacing between the two glass plates being the main part of the construction of the panels. Any shape of the cross section of the edging and any material to manufacture the edging could be used on condition that the edging will provide the right distance between the plates at each point of the panel, that this distance will not change in time for more than 20 years and that the material of the edging will provide the complete sealing of the inside of the panel from the atmosphere for the same more than 20 years period.

The edging of panels has at least one opening for supplying the aerogel to the inside of the panel between the plates. The size of holes to provide aerogel, depends on the rate of filling the panel with it. For a rate of 2 - 5 dm3 per minute, openings of 5 to 10 cm2 are recommended. The openings are preferably provided at the top side of the vertically installed panel.

During the inserting of aerogel granules to the inside of the panel, the construction supporting it can vibrate to allow a dense packing of granular bed of aerogel inside the panel. The recommended amplitude of vibration is from 0.05 to 0.2 mm for the range of 2000 to 6000 cycles per minute.

The aerogel granules which are inserted to the panel are previously inspected in a sense of particle size distribution. The granules smaller than 0.5 mm and greater than 7 mm are eliminated from the material used for filling by means of any separation methods like screening, fluidization, pneumatic separation.

The panel may be filled with aerogel in vertical position. After it is filled to the top of the space, the opening used for aerogel supply is closed tightly with a weather resistant piece of sealing material adhering to the existing edging. A vacuum valve of any construction, preferably a rubber stopper is incorporated into the said piece of material.

Referring to the present invention, it should be noted that new materials and new designs of the edge sealings are possible and even desirable.

After the closure of the opening the panel is heated up to the temperature higher than ambient temperature and lower than the temperature which may destroy the properties of the edge sealing. The preferred temperatures are in a range of 50 - 70°C. The panel has to be heated uniformly preferably with the rate from 3 to 6 K per minute. The heating could be arranged in hot air stream as well as using infrared radiators or any other heaters operating over the panel which are placed on a black plate. The choice of the heating chamber for the panels depends mainly on the size of panels and the resistance of the material of the edge sealing toward the high temperature.

Heating of the panel could take place either when the inside of the panel is connected to the atmosphere or when the vacuum is installed inside the panel before or during the heating process. Since the presence of air inside the panel helps the heat exchange between glasses and aerogel it is recommended to heat up the panel (with air inside however) previously connected with air via a vacuum valve installed in it after the filling the panel with aerogel is finished. Panel could be also heated up at the same time when it is connected with the vacuum pump. Air and water vapour are then pumped out of the panel and of the aerogel granules simultaneously to the heating up of the panel.

The evacuation of the inside of the panel at elevated temperature creates satisfactory conditions to remove air and water out of the inside of the panel. An important feature is the removal of humidity and gas which is incorporated into the aerogel granules because of the unsatisfactory drying process being the final step of aerogel manufacturing. Part of water contained in aerogel is taken from atmospheric air during the handling, storing, and transportation of aerogel from the producer to panels manufacturer.

The water content of aerogels differs in a very wide range and it could be as high as 11 weight % as well. To obtain satisfactory evacuation of water out of the aerogel it is desirable to limit this content to maximum 3,5 weight % to prevent condensation of water inside glass panels at temperatures within the range minus 20°C to minus 25°C. This condition is required for panels used as insulating window elements as well as for solar energy collectors in moderate climates.

To obtain the satisfactory dehydration of aerogel during the panel manufacturing, it is desirable to attain and keep the pressure of less than 400 millibars and preferably less than 20 millibars inside the panel. The time required to dehydrate aerogel appropriately is e.g.: 2 hours for a pressure of 400 millibars and a temperature of 70°C, 40 minutes for a pressure of 20 millibars and a temperature of 50°C, and 20 minutes of 13 millibars and 60°C.

Owing to the optimal rate of heating up the panel, thermal resistance of the components of the panel edging as well easy installing of the vacuum, the results of wide experimentation made recommend the temperature range of 50 to 70°C and pressure less than 20 millibars as the optimal values for panels with granular aerogels.

Importantly, a result of the invention is that the thermal insulation properties of a panel incorporating granular aerogels are enhanced due to the thermal and vacuum treatment of the panel. Particularly, the insulation characteristics of the aerogel inside the panel can be increased up to 20 % by utilizing a partial vacuum treatment below 100 millibars at the required high temperatures for an appropriate time period less than two hours.

The filled, heated up and evacuated panel after the time period required for dehydration of aerogel is then cut from the vacuum piping, however with the required vacuum inside. The panel is then cooled down in ambient air. In case the introduction of gas other than air to the inside of the panel is required, it could be supplied to the inside of the panel to reduce partially the vacuum provided for aerogel dehydration.

Due to the vacuum inside the panel, the granules of aerogel are pressed together and create a fixed, immobile structure. Owing to this, any moves of granules are not possible, so that settling does not occur. The vacuum makes the aerogel panel not sensitive on the changes of outside temperature and pressure. The panels manufactured at the sea level can then be used in high mountains without any settling of aerogel.

Although the invention has been described by reference to particular embodiments thereof many changes and modifications of the invention may become apparent to those skilled in the art without departing from the scope of the invention.

**Claims**

1. Method of manufacturing a multiple plate panel consisting of at least two plates and incorporating granular silica aerogels, the method comprising the steps of:
   - providing at least one opening at the upper part of an edging of the multiple plate panel,
   - supplying the granular aerogels inside the multiple plate panel through said at least one opening to fill the spacing between at least two of said plates, characterized in comprising the steps of:
   - heating the panel to a temperature higher than ambient temperature,
   - vacuuming gas contained within the panel,
   - keeping the panel under partial vacuum and at high temperature for an appropriate time period,
   - closing said at least one opening so as to keep the panel under the previously provided partial vacuum, and
   - cooling the panel down to ambient temperature.

2. Method according to claim 1, characterized by removing gas and humidity contained within the granular aerogels.

3. Method according to claim 1, characterized in that the time period during which the panel is kept under partial vacuum and at high temperature is less than or equal to 2 hours.

4. Method according to any of the preceding claims, characterized in comprising the further step of vibrating the panel incorporating the granular aerogels.

5. Method according to any of the preceding claims, characterized in that the panel incorporating aerogels is first heated and, after the required temperature is reached, it is vacuumed and then kept under partial vacuum.

6. Method according to any of claims 1 to 4, characterized in that the panel incorporating aerogels is first vacuumed and, after the required partial vacuum is reached, it is heated up under the required partial vacuum.

7. Method according to any of claims 1 to 4, characterized in that the panel incorporating aerogels is simultaneously heated up and vacuumed and then kept under partial vacuum and at elevated temperature.

8. Method according to any of the preceding claims, characterized in that the pressure provided within the panel is less than 400 millibars, and preferably less than 20 millibars.

9. Method according to any of the preceding claims, characterized in that the required high temperature inside the panel is below $100°C$, and preferably within a range from $50°C$ to $70°C$.

10. Method according to any of the preceding claims, characterized in that the required time period of heating the panel is about 20 minutes for a temperature inside the panel ranging from $50°C$ to $70°C$ and the partial vacuum inside the panel ranging from 10 millibars to 20 millibars.

11. Method according to any of the preceding claims, characterized in that the panel is tightly closed after the thermal treatment to keep the partial vacuum previously provided inside the panel incorporating aerogels.

12. Method according to any of the preceding claims, characterized in that the panel is positioned vertically or inclined when the granular aerogels are supplied within the panel.

13. Method according to any of the preceding claims, characterized in that the panel is positioned horizontally during the vacuuming and heating treatment.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | BMK - BAUEN MIT KUNSTSTOFFEN, no. 6, 1987, pages 10-15, Darmstadt, DE; J. FRICKE: "Aerogele" <br> * Paragraphs: "Aerogel-Einsatz zur Energieeinsparung", "Wärmetransport in Aerogel" * | 1,8 | E 06 B 3/66 <br> E 04 C 2/54 |
| | − − − | | |
| A | EP-A-0 121 800 (BM CHEMIE KUNSTSTOFF) <br> * Page 6, lines 21-27 * | 1 | |
| | − − − | | |
| A,D | US-A-4 610 863 (TEWARI et al.) <br> * Column 1, lines 15-38 * | 1 | |
| | − − − − − | | |

| | |
|---|---|
| | TECHNICAL FIELDS SEARCHED (Int. Cl.5) |
| | E 04 C <br> E 06 B <br> E 04 B |

The present search report has been drawn up for all claims

| Place of search | Date of completion of search | Examiner |
|---|---|---|
| The Hague | 29 January 91 | MYSLIWETZ W.P. |